# FASCICULE DE BREVET EUROPEEN

(11) **EP 0 720 935 B1**
(45) Date de publication et mention de la délivrance du brevet: **29.09.1999**
(21) Numéro de dépôt: 96400011.1
(22) Date de dépôt: 03.01.1996
(51) Int. Cl.: B60R 19/24

(54) **Dispositif pour le positionnement précis d'un pare-chocs sur une aile d'un véhicule**
Vorrichtung zur präzisen Positionierung eines Stossfängers zu einem Kotflügelteil eines Fahrzeuges
Device for precise positioning of a bumper to a vehicle fender portion

(30) Priorité: 03.01.1995 FR 9500022
(43) Date de publication de la demande: 10.07.1996
(73) Titulaire: COMPAGNIE PLASTIC OMNIUM Société Anonyme dite:, 69007 Lyon (FR)
(72) Inventeur: Devilliers, Olivier, F-52200 Langres (FR); Ghiringhelli, Bruno, F-52200 Langres (FR)
(74) Mandataire: Nony, Michel

(56) Documents cités:
- EP-A- 0 459 849
- EP-A- 0 601 937
- EP-A- 0 611 682
- DE-A- 3 927 082
- DE-A- 4 332 286

## Description

La présente invention concerne un dispositif pour le positionnement précis, ou mise en référence, d'une pièce de carrosserie de véhicule par rapport à une autre pièce de carrosserie, par exemple d'un pare-chocs sur une aile de carrosserie.

Un pare-chocs de véhicule automobile comporte généralement deux types de fixations.

D'une part, dans la partie avant du pare-chocs, une ou plusieurs fixations, dites principales, assujettissent le pare-chocs au châssis et à la caisse du véhicule.

D'autre part, dans les parties latérales ou crosses du pare-chocs, des fixations, dites secondaires, relient le pare-chocs aux ailes de la carrosserie.

Ces fixations secondaires ont essentiellement pour fonction d'empêcher les débattements verticaux du pare-chocs et de permettre la mise en référence, ou positionnement précis, du pare-chocs par rapport aux ailes du véhicule.

Ce positionnement précis, qui doit s'opérer dans les trois dimensions, est particulièrement important avec les carrosseries de véhicule actuelles qui intègrent une caisse et un bouclier comprenant une partie formant bas de caisse et une partie formant pare-chocs. Dans ce type de carrosserie, on cherche à dissimuler la frontière entre la caisse et le bouclier en assurant une continuité de forme et de couleur entre ces deux pièces.

Il est alors essentiel que le bouclier soit précisément positionné par rapport à la caisse, et notamment que les crosses du bouclier, c'est-à-dire les parties latérales destinées à envelopper les angles de la carrosserie, soient ajustées par rapport aux ailes du véhicule.

Dans l'état de la technique connu, les fixations secondaires utilisent des organes de fixation rapportés.

EP-A-459849 fournit un exemple d'un pare-chocs muni de fixations principales dans sa partie avant et de fixations secondaires dans ses parties latérales, lesquelles utilisent des organes de fixation rapportés.

De telles fixations rapportées présentent un certain nombre d'inconvénients.

Tout d'abord, pour réaliser ces organes de fixation, il est nécessaire de recourir à des outillages spécifiques.

En outre, le montage et l'assemblage des différents organes de fixation impliquent une main d'oeuvre importante et rend complexe l'automatisation du montage du pare-chocs.

De plus, la présence d'organes de fixation intermédiaires favorise la génération de bruits et nuit à une mise en référence précise du pare-chocs du fait des tolérances de cotes qui s'ajoutent entre elles.

EP-A-611682 décrit un autre exemple de pare-chocs muni de fixations secondaires constituées par des pièces rapportées qui, si elles permettent un encliquetage des parties latérales du pare-chocs sur l'aile par simple engagement longitudinal, requièrent néanmoins une mise en place préalable à la fois sur l'aile et sur le pare-chocs.

Un autre problème se pose lorsque le pare-chocs est réalisé en matière plastique, car, dans ce cas, il est nécessaire de réaliser des nervures internes au pare-chocs pour permettre sa fixation grâce aux organes de fixation intermédiaires. Or, de telles nervures engendrent des retassures dans la partie extérieure visible du pare-chocs.

La présente invention vise notamment à éviter ces inconvénients en proposant un dispositif simple et économique apte à constituer une fixation secondaire assurant la mise en référence précise du pare-chocs par rapport aux ailes du véhicule.

La présente invention a pour objet un dispositif pour la mise en place suivant une direction et le positionnement précis d'un pare-chocs sur une aile d'un véhicule automobile, caractérisé par le fait qu'il comporte :
. sur l'aile :
   - une paroi latérale visible de l'extérieur, qui s'étend inférieurement jusqu'à une première arête inférieure sensiblement parallèle à la direction de mise en place,
   - une deuxième paroi perpendiculaire à la paroi latérale et qui s'étend depuis la première arête vers l'intérieur de l'aile jusqu'à une deuxième arête parallèle à la direction de mise en place ladite deuxième paroi comportant, à l'opposé de la première arête, une découpe délimitée par un segment longitudinal parallèle à la direction de mise en place et par un segment transversal perpendiculaire à la direction de mise en place,
   - une troisième paroi sensiblement parallèle à la paroi latérale de l'aile et qui s'étend depuis la deuxième arête en direction opposée à la paroi latérale,
   - une quatrième paroi qui s'étend depuis la troisième paroi vers l'extérieur de l'aile sensiblement parallèlement à la deuxième paroi et présente un bord extérieur sensiblement parallèle à la direction de mise en place,
. sur le pare-chocs :
   - une paroi latérale visible de l'extérieur,
   - un premier rebord supérieur sensiblement parallèle à la face latérale, qui s'étend jusqu'à une arête parallèle à la direction de mise en place,
   - une paroi supérieure d'épaisseur constante et égale à la distance entre les deuxième et quatrième parois, qui s'étend depuis l'arête perpendiculairement à la paroi latérale vers l'intérieur du pare-chocs,
   - un second rebord en saillie de la paroi supérieure, sensiblement parallèle à la direction de mise en place et présentant une face extérieure sensiblement parallèle au premier rebord et une face arrière perpendiculaire à la direction de mise en place, ledit second rebord étant positionné de manière que lorsque le pare-chocs est en place, le premier rebord s'appuie contre le bord de la quatrième paroi de l'aile, tandis que la face extérieure du second rebord s'appuie contre le segment longitudinal de la deuxième paroi, et la face arrière du second rebord s'appuie contre le segment transversal de la deuxième paroi.

Selon l'invention, les deuxième et quatrième parois de l'aile, le segment longitudinal de ladite deuxième paroi et le bord extérieur de ladite quatrième paroi, en combinaison avec le premier rebord supérieur, la paroi supérieure et la face extérieure du second rebord du pare-chocs assurent la mise en référence des deux pièces dans deux directions non parallèles entre elles et non parallèles à la direction de mise en place, tandis que le segment transversal de la deuxième paroi de l'aile, en combinaison avec la face arrière du second rebord du pare-chocs assure le positionnement correct des deux pièces dans la direction de mise en place.

Dans un mode de réalisation préféré de l'invention, l'aile comporte, en avant de la quatrième paroi, des parois de guidage sur lesquelles la paroi supérieure du pare-chocs vient successivement prendre appui avant de prendre appui sur la quatrième paroi de l'aile.

Dans un autre mode de réalisation préféré, compatible avec le précédent, la quatrième paroi de l'aile comporte un bord avant incliné vers l'intérieur du véhicule et sur lequel la face intérieure du premier rebord supérieur du pare-chocs s'appuie et est guidée jusqu'à un bord arrière de ladite quatrième paroi qui est parallèle à la direction de mise en place.

Dans un autre mode de réalisation préféré, compatible avec les précédents, la deuxième paroi de l'aile comporte, dans sa découpe et en avant du segment longitudinal parallèle à la direction de mise en place, un segment de guidage incliné vers l'intérieur du véhicule et sur lequel la face extérieure du second rebord du pare-chocs s'appuie et est guidée jusqu'au segment longitudinal.

Dans un mode de réalisation préféré de l'invention, des moyens de fixation sont prévus entre les deux pièces pour empêcher le retrait de la seconde pièce après sa mise en place sur la première pièce.

Ces moyens de fixation peuvent être constitués par un système d'encliquetage, des vis ou tout autre moyen approprié.

On comprend que, grâce à l'invention, il n'est pas nécessaire de recourir à des organes de fixation intermédiaires entre les deux pièces, du fait que les différentes parties constitutives du dispositif sont réalisées sur l'aile et sur le pare-chocs de manière à assurer directement le positionnement correct et précis des deux pièces.

En outre, du fait que l'engagement du pare-chocs s'effectue par translation suivant une direction prédéterminée, il est particulièrement aisé d'automatiser l'opération de mise en place du pare-chocs sur l'aile, opération qui ne requiert pas une précision de manoeuvre très importante du fait que les différentes parties constitutives du dispositif assurent d'elles-mêmes le positionnement correct du pare-chocs par rapport à l'aile.

Dans le but de mieux faire comprendre l'invention, on va en décrire maintenant un mode de réalisation donné à titre d'exemple non limitatif en référence au dessin annexé dans lequel :
- la figure 1 est une vue schématique en perspective de la partie avant gauche d'un véhicule automobile,
- la figure 2 est une vue à plus grande échelle d'une partie de la figure 1,
- la figure 3 est une section selon III-III de la figure 2,
- la figure 4 est une vue analogue à la figure 3 illustrant une variante d'un mode de fixation,
- la figure 5 est une section selon V-V de la figure 4,
- la figure 6 est une section selon VI-VI de la figure 2,
- la figure 7 est une section selon VII-VII de la figure 2, et
- la figure 8 est une section selon VIII-VIII de la figure 2.

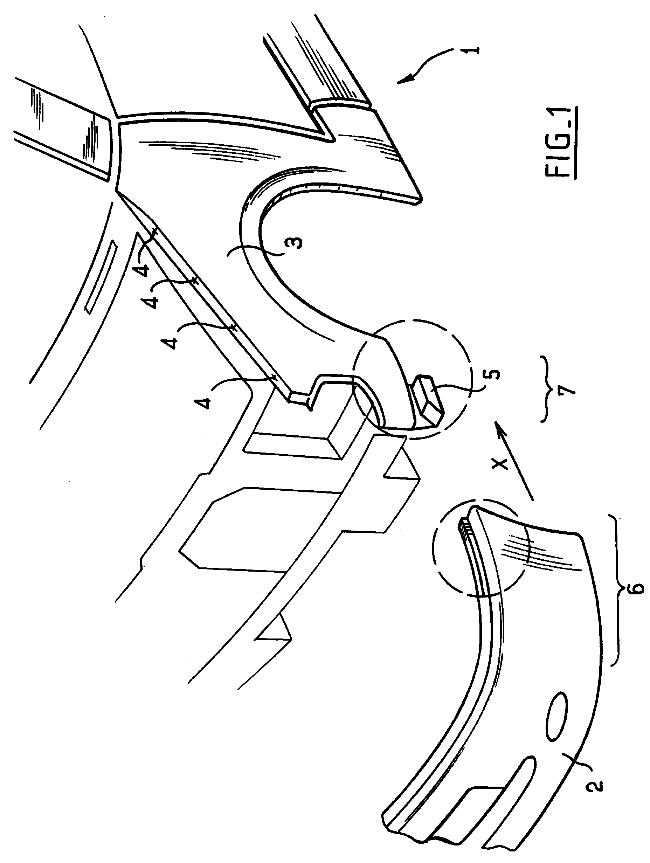

Sur la figure 1, on a représenté la partie avant gauche d'un véhicule automobile 1 et la partie correspondante d'un pare-chocs 2.

L'aile avant gauche 3 du véhicule 1 est assujettie à la caisse par différentes fixations, notamment celles indiquées par les croix 4.

A sa partie avant, l'aile 3 comporte une pièce 5 qui est de préférence issue de moulage dans le cas d'une aile réalisée en matière plastique.

Le pare-chocs 2 est du type comportant des parties latérales ou crosses 6 qui enveloppent les angles de la carrosserie et viennent s'engager en-dessous de la partie avant 7 de chaque aile avant 3 du véhicule.

Le pare-chocs 2 est destiné à être mis en place suivant la direction prédéterminée X.

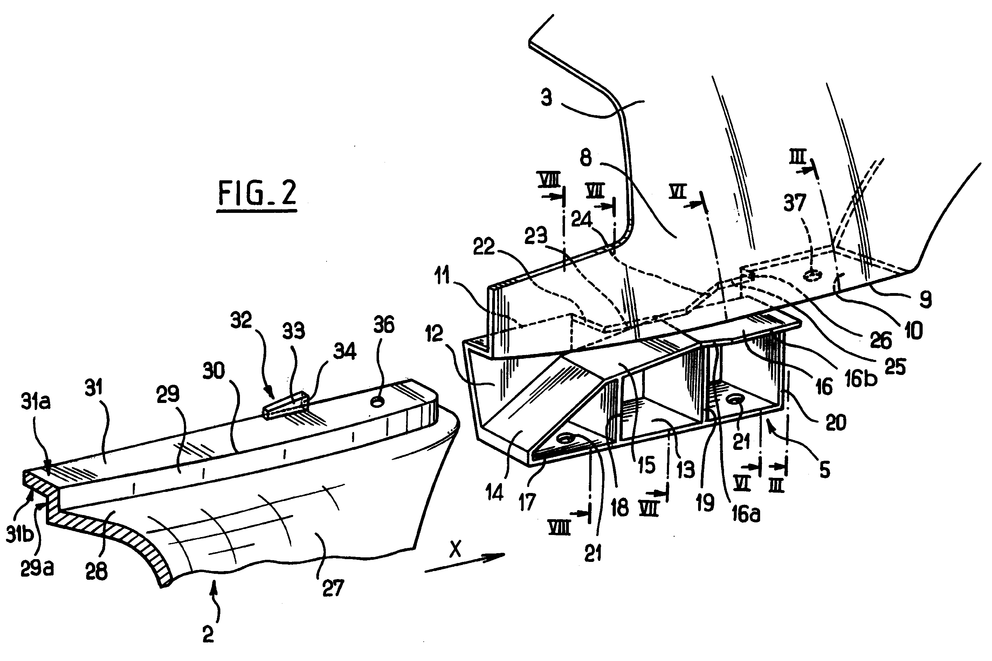

Les vues de détail et à plus grande échelle des parties délimitées par des cercles en traits interrompus du pare-chocs et de l'aile sont représentées sur la figure 2.

Sur cette figure 2, on voit la pièce 5 qui fait partie intégrante de l'aile 3.

En traits interrompus, on a représenté les arêtes cachées de l'aile qui comporte une paroi latérale 8 visible de l'extérieur, qui s'étend jusqu'à une première arête 9 d'où s'étend une deuxième paroi 10 sensiblement horizontale, jusqu'à une deuxième arête 11. La paroi 10 est évidée dans sa partie centrale au voisinage de cette deuxième arête 11.

Une troisième paroi 12, sensiblement verticale, s'étend depuis la deuxième arête 11 jusqu'à la pièce 5.

Cette dernière se compose d'une paroi inférieure sensiblement horizontale 13 et d'une paroi supérieure divisée en trois portions 14,15,16 d'inclinaison décroissante de l'avant vers l'arrière du véhicule.

La première portion de cloison 14 présente, par rapport à l'horizontale, une inclinaison d'environ 45°, la seconde 15 une inclinaison d'environ 10°, et la troisième 16 est sensiblement horizontale, c'est-à-dire qu'elle est parallèle à la face horizontale 10 de l'aile 3.

La troisième portion de paroi 16 présente une largeur qui va croissant depuis la deuxième portion de paroi 15 jusqu'à environ le premier tiers de sa longueur. De ce fait, dans son premier tiers, la portion de paroi 16 comporte un bord 16a incliné vers l'extérieur par rapport à la direction X, tandis que dans les deux tiers arrière de la portion de paroi 16, le bord 16b est parallèle à la direction X.

Entre les parois supérieures 14,15,16 et inférieure 13 de la pièce 5, s'étendent quatre cloisons verticales 17,18,19,20.

La paroi inférieure 13 de la pièce 5 comporte deux orifices 21 qui constituent deux points de fixation supplémentaires de l'aile 3 sur la caisse du véhicule.

La découpe de la paroi horizontale 10 de l'aile 3 comporte, de l'avant vers l'arrière du véhicule, un premier segment 22 sensiblement perpendiculaire à la direction X, un deuxième segment 23 sensiblement parallèle à la direction X, un troisième segment 24 incliné vers l'intérieur du véhicule d'environ 45° par rapport à la direction X, un quatrième segment 25 sensiblement parallèle à la direction X et un cinquième segment 26 perpendiculaire à la direction X.

Par ailleurs, le pare-chocs 2 comporte une paroi latérale 27 visible de l'extérieur, dont la partie supérieure arrondie 28 se termine sensiblement horizontalement.

Un premier rebord sensiblement vertical 29 s'étend jusqu'à une arête 30 d'où s'étend, vers l'intérieur du pare-chocs, une paroi sensiblement horizontale et d'épaisseur constante 31.

La largeur de la paroi horizontale 31 est sensiblement égale à celle de la pièce 5. Un second rebord vertical 32 fait saillie de la paroi horizontale 31 à l'opposé du premier rebord 29.

Ce second rebord 32 présente une face extérieure 33 sensiblement verticale et une face arrière 34 formant butée dans la direction X.

Au sens de l'invention, la paroi horizontale 10 de l'aile 3 et la portion de paroi horizontale 16 de la pièce 5 constituent une première paire de surfaces de référence.

De même, le segment 25 de la paroi horizontale 10 de l'aile 3 et le bord arrière 16b de la portion de paroi horizontale 16 de la pièce 5 forment une deuxième paire de surfaces de référence au sens de l'invention.

Le segment 26 constitue une surface de butée au sens de l'invention.

Sur le pare-chocs 2, une première paire de portées d'appui est constituée par les deux faces supérieure 31a et 31b inférieure de la paroi horizontale 31. Une seconde paire de portées d'appui est constituée par la face extérieure 33 du rebord 32 et la face intérieure 29a du rebord vertical 29, tandis que la face arrière 34 du rebord 32 constitue une portée de butée.

Dans le mode de réalisation représenté, l'aile 3 comporte des surfaces de guidage en amont des surfaces de référence. Ces surfaces de guidage sont constituées par les portions de paroi inclinées 14 et 15 de la pièce 5, par le segment 24 découpé en biais de la paroi horizontale 10 et par le bord 16a de la portion de paroi horizontale 16.

Lorsque l'on assemble le pare-chocs 2 avec l'aile 3, par translation suivant la direction X, la face inférieure 31b de la paroi horizontale 31 du pare-chocs vient prendre appui d'abord sur la première portion de paroi inclinée 14, puis sur la deuxième portion de paroi inclinée 15 et enfin sur la portion de paroi horizontale 16.

Simultanément, la face intérieure 29a du rebord vertical 29 du pare-chocs et la face extérieure 33 du rebord 32 s'appuient sur le segment 24 et le bord 16a, puis sont guidées jusqu'au segment 25 et au bord 16b.

Le déplacement du pare-chocs suivant la direction X s'effectue jusqu'à ce que la face arrière 34 du rebord 32 vienne s'appuyer contre le segment 26.

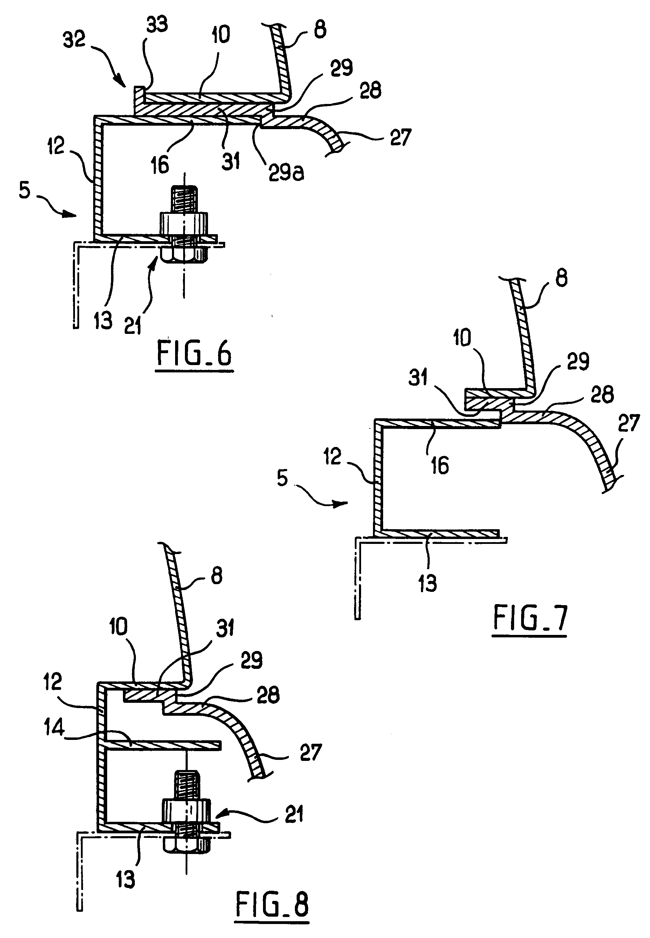

Dans la position assemblée, la paroi horizontale 31 du pare-chocs se trouve emprisonnée entre les deux paires de surface de référence, comme on le voit sur la section de la figure 6.

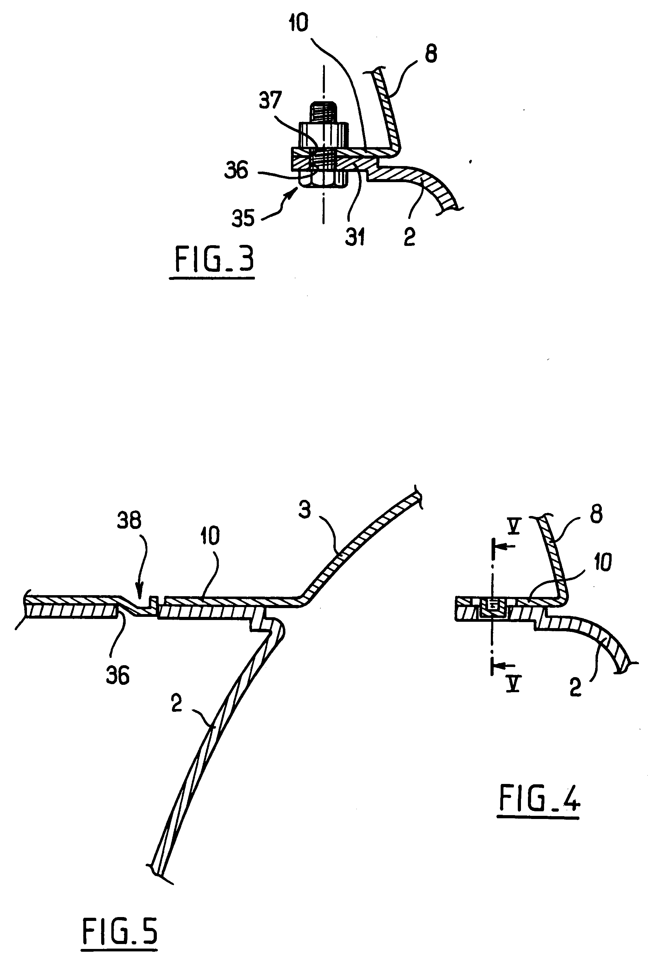

Le maintien en position du pare-chocs par rapport à l'aile peut-être assuré par une vis 35 traversant un orifice 36 du pare-chocs et un orifice 37 de l'aile qui se trouvent en regard l'un de l'autre, comme on le voit sur la section de la figure 3.

Dans une variante représentée aux figures 4 et 5, l'aile 3 comporte une languette 38 apte à venir s'encliqueter dans l'orifice 36 du pare-chocs 2 pour maintenir ce dernier en position.

On voit que, grâce aux surfaces de référence, aux portées d'appui et aux surfaces et portées de butée, la mise en référence précise du pare-chocs par rapport à l'aile est assurée.

En outre, la présence de surfaces de guidage permet de présenter le pare-chocs d'une manière relativement peu précise devant le véhicule.

Cet avantage permet notamment d'automatiser la mise en place du pare-chocs.

Il est bien évident que le mode de réalisation qui vient d'être décrit ne présente aucun caractère limitatif et qu'il pourra recevoir toutes modifications désirables sans sortir pour cela du cadre de l'invention.

En particulier, on peut mettre en oeuvre l'invention pour mettre en référence toutes pièces de carrosserie d'un véhicule, par exemple pour positionner un becquet, un déflecteur, un bandeau.

## Revendications

1. Dispositif pour la mise en place suivant une direction et le positionnement précis d'un pare-chocs (2) sur une aile (3) d'un véhicule automobile (1). caractérisé par le fait qu'il comporte :
. sur l'aile (3) :
- une paroi latérale (8) visible de l'extérieur, qui s'étend inférieurement jusqu'à une première arête inférieure (9) sensiblement parallèle à la direction de mise en place (X),
- une deuxième paroi (10) perpendiculaire à la paroi latérale (8) et qui s'étend depuis la première arête (9) vers l'intérieur de l'aile jusqu'à une deuxième arête (11) parallèle à la direction de mise en place (X), ladite deuxième paroi comportant, à l'opposé de la première arête (9), une découpe délimitée par un segment longitudinal (25) parallèle à la direction de mise en place (X) et par un segment transversal (26) perpendiculaire à la direction de mise en place (X),
- une troisième paroi (12) sensiblement parallèle à la paroi latérale (8) de l'aile et qui s'étend depuis la deuxième arête (11) en direction opposée à la paroi latérale (8),
- une quatrième paroi (16) qui s'étend depuis la troisième paroi (12) vers l'extérieur de l'aile sensiblement parallèlement à la deuxième paroi (10) et présente un bord extérieur (16b) sensiblement parallèle à la direction de mise en place (X),
. sur le pare-chocs (2) :
- une paroi latérale (27) visible de l'extérieur,
- un premier rebord supérieur (29) sensiblement parallèle à la face latérale (27), qui s'étend jusqu'à une arête (30) parallèle à la direction de mise en place,
- une paroi supérieure (31) d'épaisseur constante et égale à la distance entre les deuxième (10) et quatrième (16) parois, qui s'étend depuis l'arête (30) perpendiculairement à la paroi latérale (27) vers l'intérieur du pare-chocs,
- un second rebord (32) en saillie de la paroi supérieure (31), sensiblement parallèle à la direction de mise en place et présentant une face extérieure (33) sensiblement parallèle au premier rebord (29) et une face arrière (34) perpendiculaire à la direction de mise en place, ledit second rebord (32) étant positionné de manière que lorsque le pare-chocs est en place, le premier rebord (29) s'appuie contre le bord (16b) de la quatrième paroi (16) de l'aile, tandis que la face extérieure (33) du second rebord (32) s'appuie contre le segment longitudinal (25) de la deuxième paroi (10), et la face arrière (34) du second rebord (32) s'appuie contre le segment transversal (26) de la deuxième paroi (10).

2. Dispositif selon la revendication 1, caractérisé par le fait que l'aile comporte, en avant de la quatrième paroi (16), des parois de guidage (14,15) sur lesquelles la paroi supérieure (31) du pare-chocs vient successivement prendre appui avant de prendre appui sur la quatrième paroi (16) de l'aile.

3. Dispositif selon l'une quelconque des revendications 1 et 2, caractérisé par le fait que la quatrième paroi (16) de l'aile comporte un bord avant (16a) incliné vers l'intérieur du véhicule et sur lequel la face intérieure (29a) du premier rebord supérieur (29) du pare-chocs s'appuie et est guidée jusqu'à un bord arrière (16b) de ladite quatrième paroi (16) qui est parallèle à la direction de mise en place (X).

4. Dispositif selon l'une quelconque des revendications 1 à 3, caractérisé par le fait que la deuxième paroi (10) de l'aile comporte, dans sa découpe et en avant du segment longitudinal (25) parallèle à la direction de mise en place (X), un segment de guidage (24) incliné vers l'intérieur du véhicule et sur lequel la face extérieure (33) du second rebord (32) du pare-chocs s'appuie et est guidée jusqu'au segment longitudinal (25).

5. Dispositif selon l'une quelconque des revendications 1 à 4, caractérisé par le fait qu'il comporte des moyens de fixation (35,36,37,38) entre le pare-chocs et l'aile (2,3) pour empêcher le retrait du pare-chocs (2) après sa mise en place sur l'aile (3).

6. Dispositif selon la revendication 5, caractérisé par le fait que les moyens de fixation sont constitués par un système d'encliquetage (38,36).

7. Dispositif selon l'une quelconque des revendications 1 à 6, caractérisé par le fait que les parois latérale (27) et supérieure (31) ainsi que les premier (29) et second (32) rebords du pare-chocs se trouvent dans les crosses du pare-chocs.

## Claims

1. Device for fitting in a direction and precisely positioning a bumper (2) on a wing (3) of a motor vehicle (1), characterized in that it comprises:
• on the wing (3):
- a side wall (8) visible from the outside, which extends downward as far as a first lower edge (9) substantially parallel to the direction of fitting (X),
- a second wall (10) at right angles to the side wall (8) and extending from the first edge (9)towards the inside of the wing as far as a second edge (11) parallel to the direction of fitting (X), the said second wall comprising, on the opposite side to the first edge (9), a cut-out delimited by a longitudinal segment (25) parallel to the direction of fitting (X) and by a transverse segment (26) at right angles to the direction of fitting (X),
- a third wall (12) substantially parallel to the side wall (8) of the wing and which extends from the second edge (11) in the direction away from the side wall (8),
- a fourth wall (16) which extends from the third wall (12) towards the outside of the wing substantially parallel to the second wall (10) and exhibits an outer edge region (16b) substantially parallel to the direction of fitting (X),
• on the bumper (2):
- a side wall (27) visible from the outside,
- a first upper upstand (29) substantially parallel to the side face (27), which extends as far as an edge (30) parallel to the direction of fitting,
- an upper wall (31) of constant thickness equal to the distance between the second (10) and fourth (16) walls, which extends from the edge (30) at right angles to the side wall (27) towards the inside of the bumper,
- a second upstand (32) projecting from the upper wall (31), substantially parallel to the direction of fitting and exhibiting an outer face (33) substantially parallel to the first upstand (29) and a rear face (34) at right angles to the direction of fitting, the said second upstand (32) being positioned in such a way that when the bumper is in place, the first upstand (29) presses against the edge region (16b) of the fourth wall (16) of the wing, while the outer face (33) of the second upstand (32) presses against the longitudinal segment (25) of the second wall (10) and the rear face (34) of the second upstand (32) presses against the transverse segment (26) of the second wall (10).

2. Device according to Claim 1, characterized in that the wing comprises, forward of the fourth wall (16), guide walls (14, 15) against which the upper wall (31) of the bumper successively rests before coming to press against the fourth wall (16) of the wing.

3. Device according to either one of Claims 1 and 2, characterized in that the fourth wall (16) of the wing comprises a front edge region (16a) which is inclined towards the inside of the vehicle and against which the interior face (29a) of the first upper upstand (29) of the bumper presses and is guided as far as a rear edge region (16b) of the said fourth wall (16) which is parallel to the direction of fitting (X).

4. Device according to any one of Claims 1 to 3, characterized in that the second wall (10) of the wing comprises, in its cut-out and forward of the longitudinal segment (25) parallel to the direction of fitting (X), a guide segment (24) which is inclined towards the inside of the vehicle and against which the exterior face (33) of the second upstand (32) of the bumper rests and is guided as far as the longitudinal segment (25).

5. Device according to any one of Claims 1 to 4, characterized in that it comprises means (35, 36, 37, 38) of attachment between the bumper and the wing (2, 3) to prevent the bumper (2) from being removed once it has been fitted on the wing (3).

6. Device according to Claim 5, characterized in that the attachment means consist of a snap-fastening system (38, 36).

7. Device according to any one of Claims 1 to 6, characterized in that the side wall (27) and the upper wall (31) and the first upstand (29) and second upstand (32) of the bumper are located in the wrap-round corners of the bumper.

## Patentansprüche

1. Vorrichtung für die Montage in einer Richtung und für die präzise Positionierung eines Stoßfängers (2) an einem Kotflügel (3) eines Kraftfahrzeugs (1), dadurch gekennzeichnet, dass sie aufweist:
• an dem Kotflügel (3)
- eine von außen sichtbare Seitenwand (8), die sich im unteren Bereich bis hin zu einem unteren ersten Anschlag (9) im wesentlichen parallel zur Montagerichtung (X) erstreckt,
- eine zweite Wand (10), die zur Seitenwand (8) rechtwinklig verläuft und sich von dem ersten Anschlag (9) zum Inneren des Kotflügels hin bis zu einem zweiten Anschlag (11) parallel zur Montagerichtung (X) erstreckt, diese zweite Wand hat in Gegenrichtung zum ersten Anschlag (9) eine Aussparung, die von einem longitudinalen Segment (25) parallel zur Montagerichtung (X) und von einem transversalen Segment (26) rechtwinklig zur Montagerichtung (X) begrenzt ist,
- eine dritte Wand (12), die im wesentlichen parallel zur Seitenwand (8) des Kotflügels ist und die sich von dem zweiten Anschlag (11) in Gegenrichtung zur Seitenwand (8) erstreckt,
- eine vierte Wand (16), die sich von der dritten Wand (12) zum Außenbereich des Kotflügels im wesentlichen parallel zur zweiten Wand (10) erstreckt und die einen Außenrand (16b) hat, der im wesentlichen parallel zur Montagerichtung (X) ist,
• an dem Stoßfänger (2)
- eine von außen sichtbare Seitenwand (27),
- eine obere erste Leiste (29) im wesentlichen parallel zur Seitenfläche (27), die sich bis zu einem Anschlag (30), der parallel zur Montagerichtung verläuft, erstreckt,
- eine obere Wand (31) mit einer konstanten und entsprechend dem Abstand zwischen der zweiten Wand (10) und der vierten Wand (16) bemessenen Dicke, die sich von dem Anschlag (30) rechtwinklig zur Seitenwand (27) zum Inneren des Stoßfängers hin erstreckt,
- eine zweite Leiste (32), die von der oberen Wand (31) vorspringt, die im wesentlichen parallel zur Montagerichtung verläuft und die eine im wesentlichen parallel zur ersten Leiste (29) verlaufende Außenfläche (33) und eine rechtwinklig zur Montagerichtung verlaufende Rückfläche (34) hat, diese zweite Leiste (32) ist so angeordnet, dass bei der Montage des Stoßfängers die erste Leiste (29) am Rand (16b) der vierten Wand (16) des Kotflügels zur Anlage kommt, während die Außenfläche (33) der zweiten Leiste (32) sich und die Rückfläche (34) der zweiten Leiste (32) zur Anlage kommt am traversale Segment (26) der zweiten Wand (10) abstützt.

2. Vorrichtung nach Anspruch 1, dadurch gekennzeichnet, dass der Tragflügel vor der vierten Wand (16) Führungswände (14, 15) aufweist, auf denen die obere Wand (31) des Stoßfängers nach und nach zur Anlage kommt, bevor sie an der vierten Wand (16) des Kotflügels zur Anlage kommt.

3. Vorrichtung nach Anspruch 1 oder 2, dadurch gekennzeichnet, dass die vierte Wand (16) des Kotflügels einen Vorderrand (16a) hat, der zum Inneren des Fahrzeugs hin geneigt ist und auf dem die Innenfläche (29a) der oberen ersten Leiste (29) des Stoßfängers zur Anlage kommt und geführt wird bis zu einem hinteren Rand (16b) dieser vierten Wand (16), der parallel zur Montagerichtung (X) ist.

4. Vorrichtung nach einem der Ansprüche 1 bis 3, dadurch gekennzeichnet, dass die zweite Wand (10) des Kotflügels in ihrer Aussparung und vor dem longitudinalen Segment (25) parallel zur Montagerichtung (X) ein Führungssegment (24) aufweist, das zum Inneren des Fahrzeugs hin geneigt ist und auf dem die Außenfläche (33) der zweiten Leiste (32) des Stoßfängers zur Anlage kommt und geführt wird bis zum longitudinalen Segment (25).

5. Vorrichtung nach einem der Ansprüche 1 bis 4, dadurch gekennzeichnet, dass sie Haltemittel (35, 36, 37, 38) zwischen dem Stoßfänger (2) und dem Kotflügel (3) aufweist, um eine Rückbewegung des Stoßfängers (2) nach seiner Montage am Kotflügel (3) zu verhindern.

6. Vorrichtung nach Anspruch 5, dadurch gekennzeichnet, dass die Haltemittel von einem einklickend arbeitenden System (38, 36) gebildet sind.

7. Vorrichtung nach einem der Ansprüche 1 bis 6, dadurch gekennzeichnet, dass die Seitenwand (27) und die obere Wand (31) ebenso wie die erste Leiste (29) und die zweite Leiste (32) des Kotflügels sich in den Querbereichen des Kotflügels befinden.
